# EUROPÄISCHE PATENTSCHRIFT

(11) **EP 2 743 376 B1**
(45) Veröffentlichungstag und Bekanntmachung des Hinweises auf die Patenterteilung: **18.10.2017**
(21) Anmeldenummer: 12196521.4
(22) Anmeldetag: 11.12.2012
(51) Int. Cl.: C23C 22/34, C23C 22/74, C23C 22/83

(54) **Wässriges Mittel und Beschichtungsverfahren zur korrosionsschützenden Behandlung metallischer Substrate**
Aqueous agent and coating method for the corrosion protection treatment of metal substrates
Agent aqueux et procédé de revêtement pour le traitement anti-corrosion de substrats métalliques

(43) Veröffentlichungstag der Anmeldung: 18.06.2014
(73) Patentinhaber: Alufinish Gesellschaft für Verfahrenstechnik und Spezialfabrikation von Produkten zur Metalloberflächenbehandlung mbH & Co. KG, 56626 Andernach (DE); ThyssenKrupp Steel Europe AG, 47166 Duisburg (DE)
(72) Erfinder: Sondermann, Thomas, 56626 Andernach (DE); Strahl, Christoph, 56626 Andernach (DE); Kimpel, Matthias, 58332 Schwelm (DE); Lostak, Thomas, 46147 Oberhausen (DE)
(74) Vertreter: Wagner Albiger & Partner Patentanwälte mbB

(56) Entgegenhaltungen:
- EP-A1- 0 949 353
- JP-A- 2006 213 958
- JP-A- 2007 177 314
- JP-A- 2009 280 889
- US-A1- 2010 035 055

## Beschreibung

Die Erfindung betrifft eine wässrige Konversionslösung zur korrosionsschützenden Behandlung metallischer Substrate sowie ein Verfahren zur Beschichtung solcher Substrate mit besagter Konversionslösung.

Im Allgemeinen unterliegen metallische Substrate, wie zum Beispiel Stahlbleche für die Automobilindustrie, an ihrer Oberfläche nachteilig der Korrosion.

Der Korrosion kann jedoch durch Auftragen einer Beschichtung und/oder durch Erzeugung einer Konversionsschicht mittels einer Konversionsbehandlung des betreffenden Substrats entgegengewirkt werden. Die Konversionsschicht wird dabei im Folgenden als eine Schicht verstanden, die durch chemische Umwandlung (Konversion) des Substrats an dessen Oberfläche und verschiedener Bestandteilen eines wässrigen Passivierungsmittels gebildet wird.

Eine Konversionsbehandlung wird oft als eine Vorbehandlung angewandt. In solchen Fällen wird die Vorbehandlung auf die Metalloberfläche angewandt, um sowohl ihre Korrosionsresistenz als auch die Haftungseigenschaften zu verbessern. Auf diese Weise wird die Oberfläche darauf vorbereitet, mit einer weiteren, organischen Beschichtung versehen zu werden.

Die DE 10 2006 000 600 B4 offenbart ein Verfahren zum Beschichten von metallischen Oberflächen. Die zum Beschichten verwendete wässrige Zusammensetzung umfasst mindestens ein Phosphat, mindestens eine Zirkoniumverbindung, einen Komplexbildner sowie Kationen von Aluminium und/oder Zink. Gleichsinnig ist aus der JP 2006 213 958 A eine Zusammensetzung zur Oberflächenbehandlung metallischer Materialien bekannt, welche mindestens eine Art von Phosphorsäureverbindung enthalten muss. Ergänzend hierzu schlägt die JP 2009 161 830 A vor, wässrige, saure Metallsalzlösungen, welche Phosphorsäure umfassen können, durch eine Kombination zweier Organosiloxane zu verbessern: Ein blockiertes Isocyanat-Organosiloxan wird zusammen mit einem funktionellen Siloxan mit Amino- oder Glycid-Gruppe aufgebracht und anschließend eingebrannt, wobei die IsocyanatGruppe zersetzt, aktiviert und mit dem funktionellen Siloxan und auch mit der Metallschicht in der Hitze zur Reaktion gebracht wird.
Gleichsinnig schlägt die JP 2009 280 889 vor, in einem Siloxan-Präpolymergemisch durch Aminoalkylierung vernetzende Amin-Gruppen zu verankern, welche anschließend mit enthaltenen Epoxy-Gruppen von weiteren Siloxanen ausnetzen können, um so ein schnell aushärtendes Konversions-Polymergemisch bereitzustellen.
Alternativ zu den Siloxan-Systemen lehrt die JP 2007 177 314 A die Verwendung eines Wasserglas-Binders, welcher Alkoxy-Silan-Oligomere und Phosphatsäure-Ionen umfasst; diese Mischung eignet sich besonders gut zur Erzeugung stabiler Reiblager-Beschichtungen.

Aufgrund der negativen Umwelteinflüsse werden jedoch Verfahren, die Phosphatverbindungen und Chromverbindungen einsetzen, zunehmend durch alternative Methoden ersetzt.

Eine mögliche Alternative ist der Einsatz von sauren, wässrigen Lösungen von Fluoro-Komplexen, deren korrosionsschützende Eigenschaften bekannt sind.

Aus der DE 10 2008 014 465 A1 ist beispielsweise ein wässriges, chromfreies Mittel zur korrosionsschützenden Konversionsbehandlung von metallischen Oberflächen bekannt. Das Mittel enthält Zirkon- und Fluorverbindungen sowie wasserlösliche Verbindungen, die Eisen- und Kupfer-Ionen freisetzen. Nach der Konversionsbehandlung wird die metallische Oberfläche einer nachfolgenden Tauchlackierung unterzogen.

Soll die Konversionsbehandlung als Vorbehandlung für eine weitere Beschichtung dienen, so steigen die Anforderungen an die Haftungseigenschaften der Konversionsschicht. Es gilt sowohl die Haftung zwischen dem Substrat und der Konversionsschicht als auch die Haftung zwischen der Konversionsschicht und der weiteren Schicht zu verbessern, um negative Effekte, wie beispielsweise eine Rostunterwanderung der korrosionsschützenden Schichten möglichst zu vermeiden.

Die EP 1 900 846 A1 beschreibt ein Verfahren zur chemischen Konversionsbehandlung metallischer Substrate. Gemäß dem Verfahren der EP 1 900 846 A1 dienen Zirkonium und Fluor als Komponenten zur Bildung der Konversionsschicht und als Ätzmittel auf der Metalloberfläche, so dass die Korrosionsbeständigkeit erhöht werden kann. Zusätzlich wird ein Alkoxysilan, das eine Aminogruppe aufweist, als weitere Komponente dazu verwendet, die Haftung der Konversionsschicht sowohl am Substrat wie auch an einer nachträglich aufzutragenden Beschichtung zu verbessern.

Bei der Verwendung von Silanen, die als funktionelle Gruppen Amino-Gruppen aufweisen, ist jedoch zu beobachten, dass die Haftung der Konversionsschicht an einer darüber aufgetragenen Lackschicht nicht immer den gestellten Anforderungen genügt.

Es besteht daher weiterhin Bedarf an Mitteln und Verfahren zur korrosionsschützenden Beschichtung metallischer Substrate, die neben korrosionsschützenden Eigenschaften optimale Haftungseigenschaften haben, wodurch die Gefahr der Lackunterwanderung weitgehend vermieden werden kann.

Die Aufgabe der vorliegenden Erfindung besteht darin, eine wässrige Konversionslösung zur korrosionsschützenden Behandlung metallischer Substrate bereitzustellen, die bezüglich des Korrosionsschutzes möglichst gute Eigenschaften aufweist und mit möglichst geringen negativen Umwelteinflüssen verbunden ist.

Diese Aufgabe wird durch die vorgeschlagene Konversionslösung gemäß Patentanspruch 1 gelöst.

In den Patentansprüchen 2 bis 6 sind bevorzugte Ausführungsformen der Konversionslösung dargestellt.

Die Verwendung von Alkoxysilanen mit funktionellen Epoxygruppen in der Konversionslösung gemäß Anspruch 1 erlaubt es, auf die Verwendung von Silanen, die Amino-Gruppen aufweisen, zu verzichten. Die haftende Wirkung kann in diesem Fall die Epoxygruppe entfalten, die mit Aminogruppen einer zusätzlich aufgetragenen Beschichtung in Reaktion treten kann. Die Konversionslösung ist phosphatfrei, so dass der Anteil von darin enthaltenen sauerstoffhaltigen Anionen des Phosphor bevorzugt 10 ppmw (parts per million by weight), besonders bevorzugt 1 ppmw nicht übersteigt.

Durch die Verwendung der phosphatfreien Konversionslösung gemäß Anspruch 1 kann insbesondere der Nachteil der Schlammbildung durch lokale Ausfällung schwerlöslicher Phosphate vermieden werden. Die Konversionslösung ist chromfrei, so dass der Anteil von darin enthaltenem Chrom-Ionen bevorzugt 10 ppmw (parts per million by weight), besonders bevorzugt 1 ppmw nicht übersteigt.

Mit der chrom- und phosphatfreien Konversionslösung gemäß Anspruch 1 können etwaige Umweltbelastungen weitgehend vermindert werden. Der Zirkonium-Bestandteil trägt, insbesondere durch die Ausbildung einer passivierenden Oxidschicht auf der Substratoberfläche, zur korrosionsschützenden Wirkung der Konversionslösung bei. Die Verbindung, die in wässriger Lösung in Zirkonium-Fluor-Komplexe oder Titan-Fluor-Komplexe dissoziiert, ist aus der Gruppe ausgewählt bestehend aus:
Hexafluorzirkonsäure, Dikaliumhexafluorozirkonat, Dinatriumhexafluorozirkonat, Ammoniumhexa-fluorozirkonat, Magnesiumhexafluorozirkonat, Dilithiumhexafluorozirkonat und den analogen Titan-Verbindungen sowie deren Kombinationen.

Die Konzentration des Zirkoniums liegt vorzugsweise im Bereich von 10⁻⁵ mol/l bis 10⁻¹ mol/l, weiter bevorzugt im Bereich von 2*10⁻⁵ mol/l bis 10⁻² mol/l und besonders bevorzugt im Bereich von 10⁻⁴ mol/l bis 2*10⁻³ mol/l bezogen auf die wässrige Konversionslösung.

Die Metall-Ionen freisetzende Verbindung mit den freigesetzten Metall-Ionen beeinflusst vorteilhaft die Thermodynamik und Kinetik des Konversionsprozesses am zu beschichtenden metallischen Substrat.

Die für die erfindungsgemäße Konversionslösung verwendete Verbindung, die in wässriger Lösung Metall-Kationen freisetzt, kann beispielsweise Eisenchlorid, Eisencitrat, Eisenphosphat, Eisensulfat, Eisenacetat, Eisentartrat, Eisen-Carbonsäureverbindung, Kupferacetat, Kupferchlorid, Kupfernitrat, Kupfersulfat, Kupfer-Carbonsäureverbindung, Silberchloriden, Silberacetat, Silbersulfat, Silbernitrat, Nickelchlorid, Nickelsulfat, Nickelfluorid, Nickelnitrat, Nickelacetat, Nickel-Carbonsäureverbindung oder deren Kombination sein. Die bevorzugte Konzentration der Metall-Kationen, bezogen auf die wässrige Konversionslösung, liegt im Bereich von 10⁻⁶ mol/l bis 10⁻¹ mol/l, weiter bevorzugt im Bereich von 10⁻⁵ mol/l bis 10⁻² mol/l und besonders bevorzugt im Bereich von 2*10⁻⁵ mol/l bis 10⁻³ mol/l.

Das Alkoxysilan der Konversionslösung gemäß Anspruch 1 wird als Haftvermittler verwendet. In dieser Funktion bildet das Alkoxysilan eine haftungsvermittelnde Phase zwischen je zwei Grenzflächen. Dabei kann das Alkoxysilan als Kopplungsmolekül zwischen Metalloxiden, beispielsweise an der Oberfläche eines verzinkten Bandstahls, und einer oberen Beschichtungsschicht, wie einer Polymerschicht, beispielsweise einem Lack, eingesetzt werden. Ausgehend von molekularen Precursoren bildet sich hierbei ein Sol-Gel-Coating aus, das sich über ein interpenetrierendes Netzwerk mit der Beschichtungsschicht (zum Teil kovalent) verbindet.

Besonders vorteilhaft für eine erfolgreiche Haftvermittlung ist eine passende molekulare Funktionalität des Alkoxysilans. Die haftvermittelnde Wirkung des Alkoxysilans der Konversionslösung gemäß Anspruch 1 ist einerseits durch eine Reaktion der Epoxy-Gruppe mit einer Amino-Gruppe der oberen Beschichtungsschicht und anderseits durch eine kovalente Anbindung an ein Metalloxid des metallischen Substrats über einer aus der Hydrolyse des Alkoxysilans hervorgehenden Hydroxy-Gruppe gegeben.

Das Alkoxysilan der Konversionslösung gemäß Anspruch 1 ist als mindestens eine der folgenden Verbindungen ausgewählt: [3-2(2,3-Epoxypropoxy)-propyl]-trimethoxysilan, [3-2(2,3-Epoxypropoxy)-propyl]-triethoxysilan, [3-2(2,3-Epoxypropoxy)-propyl]-methyldiethoxysilan, [3-2(2,3-Epoxypropoxy)-propyl]-methyldimethoxysilan, [3-2(2,3-Epoxypropoxy)-propyl]-dimethylethoxysilan.

Gemäß einer Ausführungsform der Erfindung beträgt der Gewichtsanteil des Alkoxysilans zwischen 0,45 Gew.-% und 5 Gew.-%, bevorzugt liegt der Gewichtsanteil zwischen 0,6 Gew.-% und 3 Gew.-% und besonders bevorzugt zwischen 0,8 Gew.-% und 1,5 Gew.-%, der Konversionslösung.

Für die Funktion der wässrigen Konversionslösung gemäß Anspruch 1 ist es vorteilhaft, wenn sie einen pH-Wert im sauren Bereich aufweist. Dies kann beispielsweise dadurch erreicht werden, dass die in Zirkon- bzw. Titan-Fluor-Komplexe dissoziierende Verbindung in Form einer Säure eingesetzt wird. Vorzugsweise liegt der pH-Wert der Konversionslösung im Bereich zwischen 2,5 und 5, besonders bevorzugt zwischen 3,5 und 4. Zusätzlich kann die Konversionslösung ein Puffersystem enthalten, welches zur Einstellung des pH-Wertes der Konversionslösung benutzt werden kann. Das Puffersystem kann Pufferstoffe, wie beispielsweise Ammoniumbicarbonat, organische Amine, Alkalimetallhydroxide, Alkalicarbonate oder Alkalibicarbonate umfassen.

Eine weitere Aufgabe der Erfindung besteht darin, ein Verfahren zur Beschichtung metallischer Substrate vorzuschlagen, das möglichst guten Korrosionsschutz für die beschichteten Oberflächen bietet.

Die Lösung dieser Aufgabe ist durch das Verfahren zur Beschichtung metallischer Substrate gemäß dem Patentanspruch 8 gegeben.

Die Patentansprüche 9 bis 12 stellen bevorzugte Ausführungsvarianten des Verfahrens dar.

Dementsprechend weist das erfindungsgemäße Verfahren die folgenden Verfahrensschritte auf:
Zunächst wird eine Konversionslösung gemäß einer der Ansprüche 1 bis 7 hergestellt. Dazu wird eine wässrige Lösung bereitgestellt, die dissoziierte Zirkonium- oder Titan-Fluor-Komplexe enthält. Anschließend wird dieser Lösung eine wasserlösliche Verbindung zugegeben, die Metall-Kationen freisetzen kann, wobei die Metall-Kationen Eisen-, Kupfer-, Silber- und/oder Nickel-Ionen sind. Der pH-Wert der Lösung wird auf einen Wert zwischen 2,5 und 5 eingestellt. Das Einstellen des pH-Wertes kann mittels Zugabe von Pufferstoffen erfolgen. Typische Pufferstoffe, die hierbei verwendet werden können, sind Ammoniumbicarbonat, organische Amine, Alkalimetallhydroxide, Alkalicarbonate (K, Na, Li) oder Alkalibicarbonate (K, Na, Li). Ferner wird der Lösung ein Alkoxysilan hinzugefügt, wobei das Alkoxysilan mindestens eine Epoxy-Gruppe aufweist.

Die zuvor hergestellte Konversionslösung wird auf ein metallisches Substrat appliziert. Das Applizieren der Lösung auf das Substrat kann dabei durch Eintauchen des Substrats oder zumindest eines Teils des Substrats, wie beispielsweise einer Substratoberfläche in die Konversionslösung durchgeführt werden. Das Applizieren kann aber auch durch Spritzen der Lösung auf zumindest Teile des Substrats, oder durch Coaten erfolgen. Das Applizieren erfolgt bei Raumtemperatur, also bei einer Temperatur zwischen 15 °C und 30 °C, bevorzugt bei ca. 20 °C. Die Konversionslösung wird auf das Substrat während einer Applikationsdauer appliziert, die zwischen 0,5 Sekunden und 500 Sekunden, vorzugsweise zwischen 3 s und 300 s liegt.

Das mittels der Konversionslösung behandelte Substrat wird anschließend getrocknet Eine zusätzliche Spülung mit Deionat oder Brauchwasser ist hierbei möglich, jedoch nicht notwendig. Vorzugsweise erfolgt das Trocknen in einem Stickstoff- oder Luftstrom. In einigen Ausführungsformen des Verfahrens findet das Trocknen im vorgetrockneten Gasstrom statt. Das Gas kann dabei vorteilhaft erwärmt sein. Eine Druckreduzierung und/oder ein unmittelbarer Energieeintrag durch Anwendung von Infrarotstrahlung (IR) und/oder Nahinfrarotstrahlung (NIR) sowie gegebenenfalls UV-Strahlung kann beim Trocknen unterstützend wirken. Eine weitere Möglichkeit der Trocknung ist durch die Sublimationstrocknung ("Gefriertrocknung") gegeben.

Gemäß einer weiteren Ausführungsform umfasst das Verfahren ferner den Verfahrensschritt des forcierten Eintrocknens bei 40 °C bis 120 °C, bevorzugt bei 80 °C bis 100 °C. Das forcierte Eintrocknen kann nach dem Trocknen des behandelten Substrats durchgeführt werden. Es kann beispielsweise mittels einer entsprechend geeigneten Ofen- oder Trockenschrankanlage erfolgen. Durch das forcierte Eintrocknen kann vorteilhaft eine besonders wirksame kovalente Anbindung der verwendeten Silane an die Substratoberfläche erreicht werden.

Vorzugsweise wird das Substrat vor dem Applizieren der Konversionslösung gereinigt. Die Reinigung kann beispielsweise die Anwendung eines oder mehrerer alkalischer oder mildalkalischer Tauchreiniger umfassen. Sie kann ferner eine Spülung des Substrats mit Deionat oder vergleichbaren Mitteln sowie eine Trocknung des Substrats im warmen Luftstrom einschließen. Durch eine solche Reinigungsbehandlung kann insbesondere die Wirksamkeit der anschließenden Konversionsbehandlung erhöht werden.

Nach einer Ausführungsform des Verfahrens kann das behandelte Substrat mit einer weiteren Beschichtung versehen werden. Vorzugsweise wird das Substrat nach der Behandlung mit der Konversionslösung und nach dem Trocknen des Substrats mit einem geeigneten Lacksystem beschichtet. Zu den besonders geeigneten Lacksystemen gehören Pulverlacke, KT-Lacke, Coil-Coating-Lacke, hochwetterfeste Lacksysteme sowie UV-Lacksysteme. Bevorzugt umfassen die Lacke Verbindungen, die eine Bindung mit den Alkoxysilanen erlauben. Die zusätzliche Lackbeschichtung erhöht die Korrosionsbeständigkeit des Substrats und kann dabei auch andere, zum Beispiel visuelle Eigenschaften der behandelten Oberflächen vorteilhaft beeinflussen.

Von der vorliegenden Erfindung umfasst ist auch das metallische Substrat, das mittels des zuvor beschriebenen Verfahrens behandelt bzw. beschichtet wurde. Zu den geeigneten Substraten gehörten insbesondere ZnAl-Legierungen (Galfan®, Galvalume®), elektrolytisch verzinkte Stahlbänder, ZnAlMg-Legierungen, Aluminium und seine Legierungen (inklusive Gusslegierungen), Eisen- und Stahloberflächen sowie Magnesiumlegierungen.

Die Erfindung wird nachfolgend anhand einer Figur erläutert.

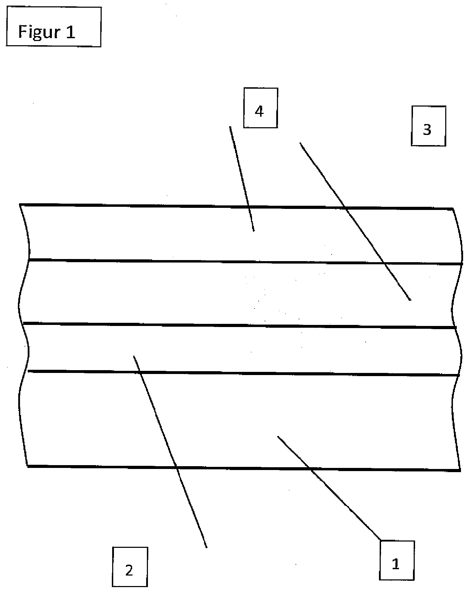

Figur 1 zeigt ein Ausführungsbeispiel eines schematischen Schichtaufbaus eines erfindungsgemäß behandelten Substrats.

Im Einzelnen ist in Figur 1 ein Ausschnitt eines behandelten Substrats im Querschnitt dargestellt. Die Abbildung soll lediglich zur Verdeutlichung des grundsätzlichen Schichtaufbaus des behandelten Substrats dienen. Sie ist nicht dazu geeignet, etwaige Informationen bezüglich der Schichtdicke oder Schichtübergänge zu liefern.

Die Grenzen zwischen den einzelnen Schichten 1, 2, 3, 4 sind als unterbrochene Linien dargestellt, um anzudeuten, dass zwischen den Schichten 1, 2, 3, 4 im Allgemeinen kein sprunghafter, sondern ein innerhalb eines gewissen Bereiches fließender Übergang stattfindet.

Das zu behandelte metallische Substrat ist in dem in Figur 1 dargestellten Beispiel durch eine feuerverzinktes Stahlblech gegeben. Die verzinkte Stahlplatte umfasst dementsprechend eine unterste Schicht 1, die im Wesentlichen aus Stahl besteht und einen Zinküberzug 2. Der Zinküberzug 2 enthält vorwiegend Zink und Zinkoxide. Anstelle der Schichten 1 und 2 können auch andere behandelte oder unbehandelte Substrate verwendet werden, wie Aluminiumlegierungen, ZnAlMg-Legierungen, Magnesiumlegierungen oder dergleichen.

Eine darüber liegende Konversionsschicht 3 wird durch eine Konversionsbehandlung des Substrats gebildet. Dazu wird das Substrat nach einer Reinigung in einer Badanlage für mehrere Sekunden mit der Konversionslösung in Kontakt gebracht. Durch anschließendes Eintrocknen bei 80 °C bis 100 °C kann insbesondere eine gute Haftung der Schichten 2 und 3 durch kovalente Anbindung der Silane an die Substratoberfläche 2 erreicht werden. Die in der Konversionsschicht 3 enthaltenen Alkoxysilane sorgen für eine gute Haftung der Korrosionsschicht 3 sowohl an den Zinküberzug 2 als auch an die als oberste Schicht aufgetragene Lackschicht 4. In der Lackschicht 4 enthaltene organische Verbindungen sind mit Amino-Gruppen versehen, so dass eine Reaktion dieser Amino-Gruppen mit den Epoxy-Gruppen des Silans stattfinden kann, die in einer verbesserten Bindung der Konversionsschicht 3 mit der Lackschicht 4 resultiert.

### Bezugszeichenliste

- 1: Substrat
- 2: Überzug
- 3: Konversionsschicht
- 4: Lackschicht

## Patentansprüche

1. Wässrige Konversionslösung zur korrosionsschützenden Behandlung
metallischer Substrate als Vorbehandlung für eine weitere Beschichtung, bestehend aus
- mindestens einer Verbindung, die in wässriger Lösung in Zirkonium- oder Titan-Fluor-Komplexe dissoziiert,
- mindestens einer wasserlöslichen Verbindung, die Metall-Kationen freisetzt, ausgewählt aus der Gruppe bestehend aus: Eisen-, Kupfer-, Silber- oder Nickel-Ionen, und
- einem wasserlöslichen Alkoxysilan, das mindestens eine Epoxy-Gruppe aufweist,
- einem optionalen Puffersystem zur Einstellung des pH-Werts, **dadurch gekennzeichnet, dass**
- die Konversionslösung im Wesentlichen phosphat- und chromfrei ist,
- das Alkoxysilan, zur Ausbildung einer haftungsvermittelnden Phase, ein [3-2(2,3-Epoxypropoxy)-propyl]-trimethoxysilan, ein [3-2(2,3-Epoxypropoxy)-propyl]-triethoxysilan, ein [3-2(2,3-Epoxypropoxy)-propyl]-methyldiethoxysilan, ein [3-2(2,3-Epoxypropoxy)-propyl]-methyldimethoxysilan, ein [3-2(2,3-Epoxypropoxy)-propyl]-dimethylethoxysilan oder eine Kombination davon ist, und
- in der wässrigen Konversionslösung auf die Verwendung von Silanen, die Amino-Gruppen aufweisen, verzichtet wird, wobei eine Reaktion von Amino-Gruppen einer nachfolgenden Lackschicht mit den Epoxy-Gruppen der haftungsvermittelnden Phase stattfinden kann.

2. Wässrige Konversionslösung nach dem vorangehenden Anspruch, **dadurch gekennzeichnet, dass** die Verbindung, die in wässriger Lösung in Zirkonium- oder Titan-Fluor-Komplexe dissoziiert ausgewählt ist aus der Gruppe bestehend aus: Dikaliumhexafluorozirkonat, Dinatriumhexafluorozirkonat, Ammoniumhexafluorozirkonat, Magnesiumhexafluorozirkonat, Dilithiumhexafluorozirkonat und deren Kombinationen, sowie den analogen Titan-Fluor-Verbindungen und deren Kombinationen.

3. Wässrige Konversionslösung nach einem der vorangehenden Ansprüche, **dadurch gekennzeichnet, dass** die Konzentration von Zirkonium im Bereich von 10⁻⁵ mol/l bis 10⁻¹ mol/l, liegt.

4. Wässrige Konversionslösung nach einem der vorangehenden Ansprüche, **dadurch gekennzeichnet, dass** die Metall-Kationen freisetzende Verbindung ausgewählt ist aus der Gruppe bestehend aus: Eisenchloriden, Eisencitraten, Eisenphosphaten, Eisensulfaten, Eisenacetaten, Eisentartraten, Eisen-Carbonsäureverbindungen, Kupferacetaten, Kupferchloriden, Kupfernitraten, Kupfersulfaten, Kupfer-Carbonsäureverbindungen, Silberchloriden, Silberacetaten, Silbersulfaten, Silbernitraten, Nickelchloriden, Nickelsulfaten, Nickelfluoriden, Nickelnitraten, Nickelacetaten, Nickel-Carbonsäureverbindungen und deren Kombinationen.

5. Wässrige Konversionslösung nach einem der vorangehenden Ansprüche, **dadurch gekennzeichnet, dass** die Konzentration der Metall-Kationen im Bereich von 10⁻⁶ mol/l bis 10⁻¹ mol/l liegt.

6. Wässrige Konversionslösung nach einem der vorangehenden Ansprüche, **dadurch gekennzeichnet, dass** der Gewichtsanteil des Alkoxysilans zwischen 0,45 Gew.-% und 5 Gew.-% beträgt.

7. Wässrige Konversionslösung nach einem der vorangehenden Ansprüche, **dadurch gekennzeichnet, dass** der pH-Wert im Bereich zwischen 2,5 und 5 liegt.

8. Verfahren zur Beschichtung metallischer Substrate, aufweisend die folgenden Verfahrensschritte:
- Herstellen einer Konversionslösung gemäß einer der Ansprüche 1 bis 7 durch
Zugabe einer wasserlöslichen Verbindung, die Metall-Kationen freisetzt, ausgewählt aus der Gruppe bestehend aus: Eisen-, Kupfer-, Silber- oder Nickel-Ionen, in eine wässrige Lösung, die dissoziierte Zirkonium- oder Titan-Fluor-Komplexe enthält,
Einstellen des pH-Wertes der Lösung durch Zugabe eines Pufferstoffes auf einen pH-Wert, der zwischen 2,5 und 5 liegt, und
Zugabe eines Alkoxysilans in die Lösung, wobei
- das Alkoxysilan mindestens eine Epoxy-Gruppe aufweist,
- die Konversionslösung im Wesentlichen phosphat- und chromfrei ist,
- das Alkoxysilan ein [3-2(2,3-Epoxypropoxy)-propyl]-trimethoxysilan, ein [3-2(2,3-Epoxypropoxy)-propyl]-triethoxysilan, ein [3-2(2,3-Epoxypropoxy)-propyl]-methyldiethoxysilan, ein [3-2(2,3-Epoxypropoxy)-propyl]-methyldimethoxysilan, ein [3-2(2,3-Epoxypropoxy)-propyl]-dimethylethoxysilan oder eine Kombination davon ist,
- in der Konversionslösung auf die Verwendung von Silanen, die Amino-Gruppen aufweisen, verzichtet wird;
- Applizieren der Konversionslösung auf das Substrat, wobei das Applizieren durch Eintauchen, Spritzen oder Coaten bei Raumtemperatur erfolgt, wobei die Applikationsdauer zwischen 0,5 s und 500 s liegt;
- Trocknen des behandelten Substrats, wobei das Alkoxysilan als Vorbehandlung für eine weitere Beschichtung eine haftungsvermittelnde Phase ausbildet und wobei eine Reaktion von Amino-Gruppen einer nachfolgenden Lackschicht mit den Epoxy-Gruppen der haftungsvermittelnden Phase stattfinden kann.

9. Verfahren nach Anspruch 8, **dadurch gekennzeichnet, dass** das Trocknen im Stickstoff- oder Luftstrom, durch Sublimationstrocknung und/oder unter Anwendung von IR-, NIR- oder UV-Strahlung erfolgt.

10. Verfahren nach einem der Ansprüche 8 bis 9, **dadurch gekennzeichnet, dass** nach dem Verfahrensschritt des Trocknens ein forciertes Eintrocknen bei 40°C bis 120°C, vorzugsweise bei 80 °C bis 100 °C erfolgt.

11. Verfahren nach einem der Ansprüche 8 bis 10, **dadurch**
**gekennzeichnet, dass** vor dem Verfahrensschritt des Applizierens der Konversionslösung ein Reinigen des Substrats erfolgt.

12. Verfahren nach einem der Ansprüche 8 bis 11, **dadurch**
**gekennzeichnet, dass** das Verfahren ferner nach Ausbildung einer haftungsvermittelnden Phase durch das Alkoxysilan ein Beschichten des behandelten Substrats mit einem Lacksystem umfasst.

## Claims

1. Aqueous conversion solution for the anti-corrosive treatment of metallic substrates as a pre-treatment for a further coating, consisting of
- at least one compound which dissociates into zirconium- or titanium-fluorine complexes in aqueous solution,
- at least one water-soluble compound which releases metal cations, selected from the group consisting of: iron, copper, silver or nickel ions, and
- a water-soluble alkoxysilane which has at least one epoxy group,
- an optional buffer system for adjustment of the pH value, **characterised in that**
- the conversion solution is substantially free of phosphate and chromium
- the alkoxysilane, for formation of an adhesion-promoting phase, is a [3-2(2,3-epoxypropoxy)-propyl]-trimethoxysilane, a [3-2(2,3-epoxypropoxy)-propyl]-triethoxysilane, a [3-2(2,3-epoxypropoxy)-propyl]-methyldiethoxysilane, a [3-2(2,3-epoxypropoxy)-propyl]-methyldimethoxysilane, a [3-2(2,3-epoxypropoxy)-propyl]-dimethylethoxysilane or a combination thereof, and
- in the aqueous conversion solution, the use of silanes which have amino groups is dispensed with, wherein a reaction of amino groups of a subsequent lacquer layer with the epoxy groups of the adhesion-promoting phase can take place.

2. Aqueous conversion solution according to the preceding claim, **characterised in that** the compound which is dissociated into zirconium- or titanium-fluorine complexes in aqueous solution is selected from the group consisting of: dipotassium hexafluorozirconate, disodium hexafluorozirconate, ammonium hexafluorozirconate, magnesium hexafluorozirconate, dilithium hexafluorozirconate and combinations thereof, as well as the analogous titanium-fluorine compounds and combinations thereof.

3. Aqueous conversion solution according to one of the preceding claims, **characterised in that** the concentration of zirconium ranges from 10⁻⁵ mol/l to 10⁻¹ mol/l.

4. Aqueous conversion solution according to one of the preceding claims, **characterised in that** the compound releasing metal cations is selected from the group consisting of: iron chlorides, iron citrates, iron phosphates, iron sulphates, iron acetates, iron tartrates, iron carboxylic acid compounds, copper acetates, copper chlorides, copper nitrates, copper sulphates, copper carboxylic acid compounds, silver chlorides, silver acetates, silver sulphates, silver nitrates, nickel chlorides, nickel sulphates, nickel fluorides, nickel nitrates, nickel acetates, nickel carboxylic acid compounds and combinations thereof.

5. Aqueous conversion solution according to one of the preceding claims, **characterised in that** the concentration of the metal cations ranges from 10⁻⁶ mol/l to 10⁻¹ mol/l.

6. Aqueous conversion solution according to one of the preceding claims, **characterised in that** the weight proportion of the alkoxysilane is between 0.45% by weight and 5% by weight.

7. Aqueous conversion solution according to one of the preceding claims, **characterised in that** the pH value ranges between 2.5 and 5.

8. Method for coating metallic substrates, having the following method steps:
- producing a conversion solution according to one of the claims 1 to 7 by
addition of an aqueous compound which releases metal cations, selected from the group consisting of: iron, copper, silver or nickel ions, into an aqueous solution which contains dissociated zirconium- or titanium-fluorine complexes,
adjusting the pH value of the solution to a pH value which is between 2.5 and 5 by addition of a buffer substance, and
addition of an alkoxysilane into the solution, wherein
- the alkoxysilane has at least one epoxy group
- the conversion solution is substantially free of phosphate and chromium,
- the alkoxysilane is a [3-2(2,3-epoxypropoxy)-propyl]-trimethoxysilane, a [3-2(2,3-epoxypropoxy)-propyl]-triethoxysilane, a [3-2(2,3-epoxypropoxy)-propyl]-methyldiethoxysilane, a [3-2(2,3-epoxypropoxy)-propyl]-methyldimethoxysilane, a [3-2(2,3-epoxypropoxy)-propyl]-dimethylethoxysilane or a combination thereof,
- in the conversion solution, the use of silanes which have amino groups is dispensed with;
- applying the conversion solution to the substrate, wherein the application occurs by dipping, injecting or coating at room temperature, wherein the application duration is between 0.5 seconds and 500 seconds;
- drying the treated substrate, wherein the alkoxysilane forms an adhesion-promoting phase as a pre-treatment for a further coating and wherein a reaction of amino groups of a subsequent lacquer layer with the epoxy groups of the adhesion-promoting phase can take place.

9. Method according to claim 8, **characterised in that** the drying occurs under a flow of nitrogen or air, by sublimation drying and/or using IR, NIR or UV radiation.

10. Method according to one of claims 8 to 9, **characterised in that** a forced drying out occurs at 40°C to 120°C, preferably at 80°C to 100°C, after the method step of drying.

11. Method according to one of claims 8 to 10, **characterised in that** a cleaning of the substrate occurs before the method step of applying the conversion solution.

12. Method according to one of claims 8 to 11, **characterised in that** the method furthermore comprises a coating of the treated substrate with a lacquer system after formation of an adhesion-promoting phase by the alkoxysilane.

## Revendications

1. Solution aqueuse de conversion destinée à un traitement anti-corrosion de substrats métalliques en tant que prétraitement pour un revêtement supplémentaire, consistant en
- au moins un composé qui se dissocie en complexes fluorés de zirconium ou de titane en solution aqueuse,
- au moins un composé hydrosoluble qui libère des cations métalliques, sélectionnés à partir du groupe constitué par : ions fer, cuivre, argent ou nickel, et
- un alcoxysilane hydrosoluble, qui présente au moins un groupe époxy,
- un système tampon éventuel destiné à l'ajustement du pH,
**caractérisée en ce que**
- la solution de conversion est sensiblement exempte de phosphate et de chrome,
- l'alcoxysilane destiné à la formation d'une phase conférant de l'adhérence est un [3-2(2,3-époxypropoxy)-propyl]-triméthoxysilane, un [3-2(2,3-époxypropoxy)-propyl]-triéthoxysilane, un [3-2(2,3-époxypropoxy)-propyl]-méthyldiéthoxysilane, un [3-2(2,3-époxypropoxy)-propyl]-méthyldiméthoxysilane, un [3-2(2,3-époxypropoxy)-propyl]-diméthyléthoxysilane ou une combinaison de ceux-ci, et
- l'utilisation de silanes présentant des groupes amino dans la solution de conversion aqueuse, dans laquelle une réaction des groupes amino d'une couche de laque consécutive peut avoir lieu avec les groupes époxy de la phase conférant de l'adhérence, est écartée.

2. Solution aqueuse de conversion selon la revendication précédente, **caractérisée en ce que** le composé qui se dissocie en complexes fluorés de zirconium ou de titane en solution aqueuse est sélectionné à partir du groupe constitué par : hexafluorozirconate dipotassique, hexafluorozirconate disodique, hexafluorozirconate d'ammonium, hexafluorozirconate de magnésium, hexafluorozirconate de dilithium et leurs combinaisons, ainsi que les composés fluorés de titane analogues et leurs combinaisons.

3. Solution aqueuse de conversion selon l'une quelconque des revendications précédentes, **caractérisée en ce que** la concentration en zirconium est comprise dans la plage de 10⁻⁵ mol/l à 10⁻¹ mol/L.

4. Solution aqueuse de conversion selon l'une quelconque des revendications précédentes, **caractérisée en ce que** le composé libérant des cations métalliques est sélectionné à partir du groupe constitué par : chlorures de fer, citrates de fer, phosphates de fer, sulfates de fer, acétates de fer, tartrates de fer, composés de fer - acide carboxylique, acétates de cuivre, chlorures de cuivre, nitrates de cuivre, sulfates de cuivre, composés de cuivre - acide carboxylique, chlorures d'argent, acétates d'argent, sulfates d'argent, nitrates d'argent, chlorures de nickel, sulfates de nickel, fluorures de nickel, nitrates de nickel, acétates de nickel, composés de nickel - acide carboxylique et leurs combinaisons.

5. Solution aqueuse de conversion selon l'une quelconque des revendications précédentes, **caractérisée en ce que** la concentration en cations métalliques est comprise dans la plage de 10⁻⁶ mol/L à 10⁻¹ mol/L.

6. Solution aqueuse de conversion selon l'une quelconque des revendications précédentes, **caractérisée en ce que** la proportion en poids d'alcoxysilane est comprise entre 0,45 % en poids et 5 % en poids.

7. Solution aqueuse de conversion selon l'une quelconque des revendications précédentes, **caractérisée en ce que** le pH est compris dans la plage entre 2,5 et 5.

8. Procédé de revêtement de substrats métalliques, présentant les étapes de procédé suivantes :
- préparation d'une solution de conversion selon l'une quelconque des revendications 1 à 7 par addition d'un composé hydrosoluble qui libère des cations métalliques, sélectionnés à partir du groupe constitué par : ions fer, cuivre, argent ou nickel, dans une solution aqueuse qui contient des complexes fluorés de zirconium ou de titane dissociés,
ajustement du pH de la solution par addition d'une substance tampon avec un pH qui est compris entre 2,5 et 5, et
addition d'un alcoxysilane à la solution, dans lequel
- l'alcoxysilane hydrosoluble présente au moins un groupe époxy,
- la solution de conversion est sensiblement exempte de phosphate et de chrome,
- l'alcoxysilane est un [3-2(2,3-époxypropoxy)-propyl]-triméthoxysilane, un [3-2(2,3-époxypropoxy)-propyl]-triéthoxysilane, un [3-2(2,3-époxypropoxy)-propyl]-méthyldiéthoxysilane, un [3-2(2,3-époxypropoxy)-propyl]-méthyldiméthoxysilane, un [3-2(2,3-époxypropoxy)-propyl]-diméthyléthoxysilane ou une combinaison de ceux-ci, et
- l'utilisation de silanes présentant des groupes amino dans la solution de conversion est écartée ;
- application de la solution de conversion sur le substrat, dans lequel l'application se fait par immersion, injection, ou enduction à température ambiante, dans lequel la durée d'application varie entre 0,5 s et 500 s ;
- séchage du substrat traité, dans lequel l'alcoxysilane forme une phase conférant de l'adhérence en tant que prétraitement pour un revêtement supplémentaire et dans lequel une réaction des groupes amino d'une couche de laque consécutive peut avoir lieu avec les groupes époxy de la phase conférant de l'adhérence.

9. Procédé selon la revendication 8, **caractérisé en ce que** le séchage s'effectue dans un courant azoté ou un courant d'air, par le biais d'un séchage par sublimation et/ou en appliquant un rayonnement IR, NIR ou UV.

10. Procédé selon l'une quelconque des revendications 8 à 9, **caractérisé en ce que**, après l'étape de procédé de séchage, un séchage forcé à une température de 40 °C à 120 °C, de préférence de 80 °C à 100 °C, est réalisé.

11. Procédé selon l'une quelconque des revendications 8 à 10, **caractérisé en ce que**, avant l'étape de procédé d'application de la solution de conversion, un nettoyage du substrat est réalisé.

12. Procédé selon l'une quelconque des revendications 8 à 11, **caractérisé en ce que** le procédé comprend en outre une opération de revêtement du substrat traité avec un système de laque après la formation d'une phase conférant de l'adhérence par le biais de l'alcoxysilane.
